# EUROPEAN PATENT APPLICATION

(11) **EP 4 102 196 A1**
(43) Date of publication of application: **14.12.2022**
(21) Application number: 22165684.6
(22) Date of filing: 30.03.2022
(51) Int. Cl.: G01F 23/292, B60S 1/50, G01F 23/00, G01F 23/02, B60K 11/04, B60T 11/26

(54) **FLUID RESERVOIR SYSTEM OF A VEHICLE**

(30) Priority: 07.06.2021 US 202117340988
(71) Applicant: International Truck Intellectual Property Company, LLC, Lisle, IL 60532 (US)
(72) Inventor: SORENSEN, Tom Lee, Naperville, IL 60564 (US)
(74) Representative: Kuhnen & Wacker Patent- und Rechtsanwaltsbüro PartG mbB

(57) **Abstract**

A vehicle fluid reservoir system has a fluid tank that contains a vehicle fluid and a light source in an interior of the fluid tank that illuminates the interior of the tank and the surface of fluid in the tank. The illumination of the surface of fluid in the tank is visible from outside the tank, enabling a quick and easy determination of the level of fluid inside the tank. A switch is operatively communicated with the light source. The switch is operable to control the light source to emit light and illuminate the interior of the tank and the fluid surface in the interior of the tank, and to control the light source not to emit light.

## Description

### FIELD

This disclosure pertains to a vehicle fluid reservoir system having a fluid tank that contains brake fluid, power steering fluid, radiator fluid, windshield washer fluid and the like. The vehicle fluid reservoir system employs a light source in the interior of the tank that illuminates the surface of fluid in the tank that is visible from outside the tank, enabling a quick and easy determination of the level of fluid inside the tank.

### BACKGROUND

Vehicle fluid reservoir systems containing brake fluid, power steering fluid, radiator fluid, windshield washer fluid and the like are typically contained in a tank having a translucent side wall. However, because the tank is located under the hood of the vehicle and often in a dark environment under the hood, it is very difficult to determine the level of fluid in the interior of the tank by observing the exterior of the tank side wall. Light often reflects on the outside surface of the tank side wall, further making it difficult to observe the level of fluid inside the tank or view the fill mark inside the tank. Many vehicle fluids now used are clear, making it almost impossible to view the level of fluid in the interior of the tank.

### SUMMARY

The fluid reservoir system of a vehicle of this disclosure facilitates a visual determination of a level of vehicle fluid contained inside a fluid tank under the hood of the vehicle.

The fluid reservoir system comprises a tank having a side wall that encloses an interior of the tank. The side wall of the tank is constructed of a material that allows light to pass through the side wall.

A light source is positioned in the interior of the tank. The light source is operable to alternatively emit light and illuminate the interior of the tank and illuminate the fluid surface in the interior of the tank, and not to emit light in the interior of the tank.

A switch is operatively communicated with the light source. The switch can be a manually operable switch. Alternatively, Probthe switch includes means for sensing the fluid surface of the fluid in the interior of the tank and is operable in response to the sensed fluid surface. The switch is operable to control the light source to emit light and illuminate the interior of the tank and the fluid surface in the interior of the tank, and to control the light source to not emit light.

The features, functions and advantages that have been discussed can be achieved independently in various embodiments or may be combined in yet other embodiments, further details of which can be seen with reference to the following description and drawings.

### BRIEF DESCRIPTION OF THE DRAWINGS

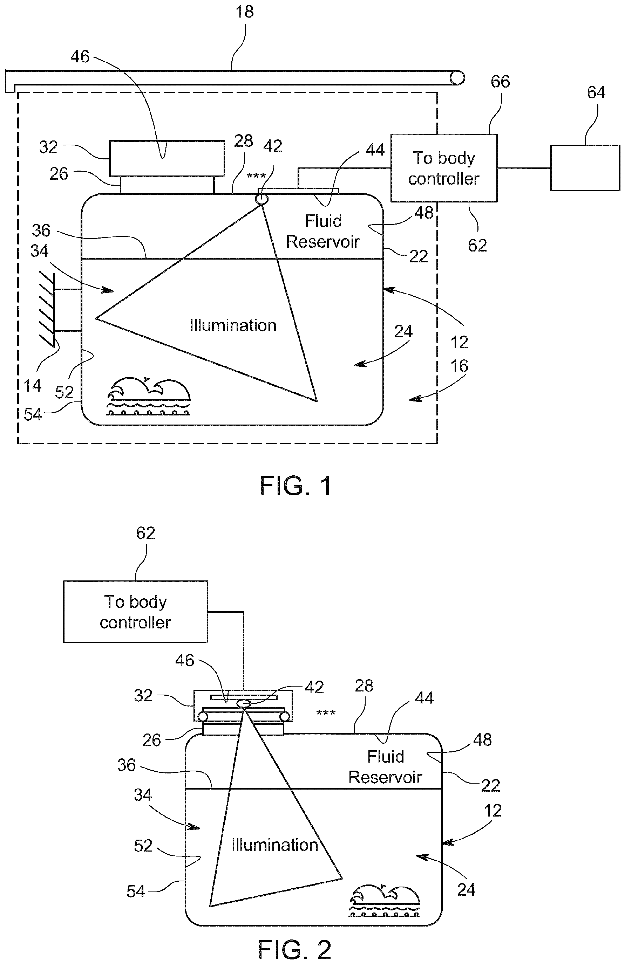

Figure 1 is a schematic representation of a side elevation view of the fluid reservoir system of a vehicle of this disclosure.
Figure 2 is a schematic representation of a side elevation view of a further embodiment of the fluid reservoir system of a vehicle.
Figure 3 is a schematic representation of a side elevation view of a further embodiment of the fluid reservoir system of a vehicle.
Figure 4 is a schematic representation of a side elevation view of a still further embodiment of the fluid reservoir system of a vehicle.

### DETAILED DESCRIPTION

The fluid reservoir system of a vehicle is designed to be operatively attached to and supported by a portion of a vehicle structure under the hood of the vehicle and in the engine compartment of the vehicle. This environment of the fluid reservoir system is typically dark even when the hood is raised exposing the engine compartment to ambient light conditions. The dark environment makes it difficult for an individual to observe the fluid reservoir system, much less the level of fluid contained by the fluid reservoir system. The fluid reservoir system of this disclosure overcomes the difficulties typically encountered in observing the level of fluid contained by a fluid reservoir system.

The fluid reservoir system includes a tank 12. The tank is secured to a structure 14 of a vehicle in the engine compartment 16 of the vehicle. A hood 18 of the vehicle closes over the engine compartment 16. The hood 18 opens from the engine compartment 16 providing access to the engine compartment 16, as is typical. The tank 12 has a structure that includes at least one side wall 22 that encloses an interior 24 of the tank. The side wall 22 of the tank is constructed of a material that allows light to pass through the side wall 22. The tank 12 is designed to contain vehicle fluids in the tank interior 24. The vehicle fluids include brake fluid, a windshield washer fluid, a power steering fluid, a radiator fluid, or any other type of fluid required for the proper operation of a motor vehicle.

A cylindrical neck 26 extends upwardly from a top wall 28 of the tank 12. The cylindrical neck 26 surrounds an opening through the top wall 28 of the tank 12 to the interior 24 of the tank 12. A cylindrical cap 32 is screw threaded on the neck 26 in a conventional manner. The cap 32 is manually attachable and removable from the neck 26, again in a conventional manner.

The vehicle fluid 34 contained in the interior 24 of the tank 12 has a fluid surface 36. With the side wall 22 of the tank 12 being constructed of a material that allows light to pass through the side wall, the fluid surface 36 in the interior of the tank 24 is visible on the tank side wall 22 when there is sufficient light in the engine compartment 16.

There is a light source 42 in the interior 24 of the tank 12. The light source 42 is operable to alternatively emit light and illuminate the interior 24 of the tank 12 and to not emit light and not illuminate the interior of the tank. The light source 42 is a light emitting diode or LED type of light source. The light source 42 could be another equivalent type of light source. The light source 42 is secured to an interior surface of the tank 12. The light source 42 could be secured to an interior surface 44 of the top wall 28 of the tank 12 with the light source 42 positioned to emit light directed downwardly toward the fluid surface 36 in the interior 24 of the tank 12. The light source 42 could be secured to an interior surface 46 of the cap 32 with the light source 42 positioned to emit light directed downwardly toward the fluid surface 36 in the interior 34 of the tank 12. The light source 42 could be secured to an interior surface 48 of the side wall 22 of the tank 12 with the light source 42 positioned to emit light directed downwardly toward and across the fluid surface 36 in the interior 24 of the tank 12 and toward an interior surface 52 of an opposite side wall 54 of the tank 12. In each positioning of the light source 42, the light source 42 is positioned in the interior 24 of the tank 12 enabling light emitted from the light source 42 and illuminating the interior 24 of the tank 12 to illuminate the fluid surface 36 in the interior 24 of the tank 12 and enables the fluid surface 36 to be visible through the side wall 22 of the tank 12 from outside the interior 24 of the tank 12.

A switch 62 communicates a source of power 64 with the light source 42. The source of power 64 is a source of electric power, for example the vehicle battery or an electric generating system of the vehicle. The switch 62 is operable to control the light source 42 to emit light and control the light source 42 to not emit light. '

The switch 62 can be positioned outside the interior 24 of the tank 12. The switch 62 can be a manual switch that is manually operable to control the light source 42 to emit light in response to manual manipulation of the switch 62, and to control the light source 42 to not emit light in response to manual manipulation of the switch 62. The switch 62 can be positioned in a driver compartment 66 of the vehicle. The switch 62 could be positioned in the engine compartment 16 and under the hood 18 of the vehicle. The switch 62 positioned under the hood 18 could be operatively connected to the hood 18. The switch 62 operatively connected to the hood 18 is operable to control the light source 42 to emit light in response to the hood 18 being moved to an open position of the hood 18 relative to the vehicle and the engine compartment 16. The switch 62 operatively connected to the hood 18 is operable to control the light source 42 to not emit light in response to the hood 18 being moved to a closed position of the hood 18 relative to the vehicle and the engine compartment 16.

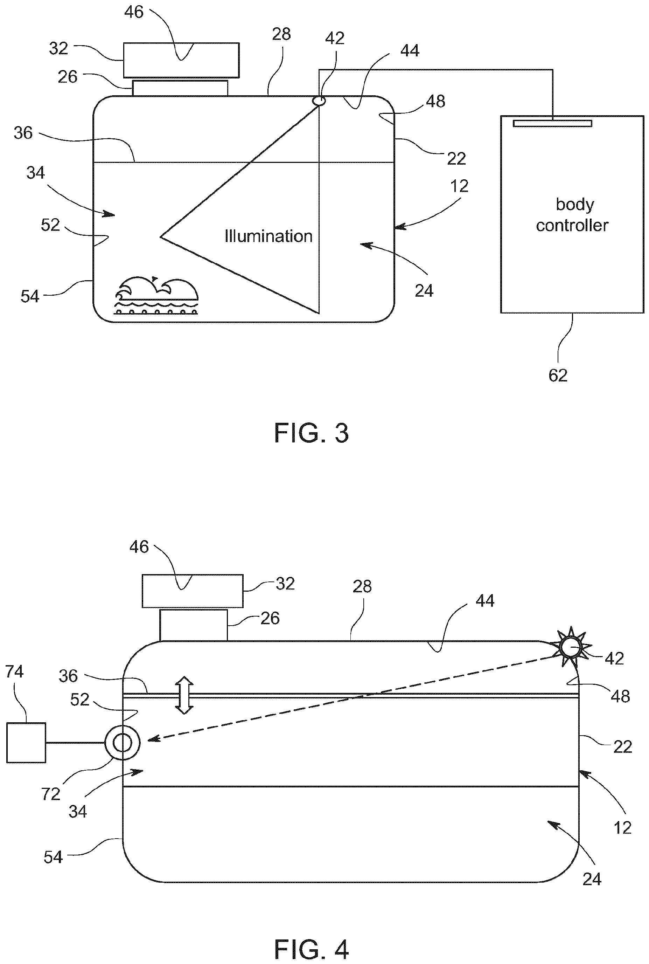

A photo sensor 72 could be positioned on the side wall of the tank 12. As represented in Figure 4, with the light source 42 positioned on the interior surface of the side wall 48, the photo sensor 72 is positioned on the opposite side wall 54 of the tank 12. In this arrangement, light emitted from the light source 42 not only illuminates the interior 24 of the tank 12 and illuminates the fluid surface 36 in the interior 24 of the tank 12, but also passes through the fluid surface 36 and the fluid to the photo sensor 72 where the light emitted from the light source 42 is sensed by the photo sensor 72. The photo sensor 72 communicates with a computer that has been programmed with an algorithm that determines the level of the fluid surface 36 in the tank 12 and other properties of the fluid in the tank 12 such as the fluid age, the fluid quality, the amount of impurities in the fluid, etc. The fluid age, the fluid quality and impurities in the fluid all change the light transmittivity that is detected by the photo sensor 72. The changes in light transmittivity sensed by the photo sensor 72 are communicated to the computer 74 and the computer outputs a signal that is representative of degrees of fluid quality. The output signal can be communicated to a visual display in the driver compartment 66 that displays some visual indication of the degree of fluid quality. The level of the fluid surface 36 dropping below a minimum level is also sensed by the photo sensor 72 by the photo sensor 72 becoming light saturated. The light saturation detected by the photo sensor 72 is communicated with the computer 74 which outputs a signal to a visual display in the driver compartment 66 that provides a visual indication of the level of the fluid surface 36 in the tank 12.

The switch 62 could also be positioned in the interior 24 of the tank 12. The switch 62 in the interior 24 of the tank 12 has a means for sensing a position of the fluid surface 36 in the interior 24 of the tank 12. The switch 62 in the interior 24 of the tank 12 is operable to control the light source 42 to emit light in response to the switch 62 sensing the fluid surface 36 being at a first position in the interior 24 of the tank 12, and the switch 62 being operable to control the light source 42 to not emit light in response to the switch 62 sensing the fluid surface 36 being at a second position in the interior 24 of the tank 12, the second position being above the first position.

As stated earlier, the tank 12 is designed to contain vehicle fluids in the tank interior 24 that include a brake fluid, a windshield washer fluid, a power steering fluid, a radiator fluid, or any other type of fluid required for the proper operation of a motor vehicle. Thus, the tank 12 may be a first fluid tank containing a first vehicle fluid of a plurality of different fluid tanks containing a plurality of different vehicle fluids.

The light source 42 may be a first light source of a plurality of different light sources with each light source of the plurality of different light sources being positioned in a fluid tank of the plurality of fluid tanks.

The switch 62 may be a single switch that operatively communicates with each light source 42 of the plurality of different light sources. Alternatively, the switch 62 may be a first switch of a plurality of different switches. Each switch 62 of the plurality of different switches operatively communicating with a light source 42 of the plurality of different light sources and being operable to control the light source. Each switch 62 of the plurality of different switches may be positioned in an interior 24 of a fluid tank 12 of the plurality of different fluid tanks and each switch 62 of the plurality of different switches may have means for sensing a position of a fluid surface 32 of the vehicle fluid in the interior 24 of each fluid tank 12.

As various modifications could be made in the constructions of the tank, the light source and the switch and their methods of operation herein described and illustrated without departing from the scope of the invention, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto and their equivalents.

## Claims

1. A fluid reservoir system of a vehicle comprising:
a tank, the tank having a side wall that encloses an interior of the tank;
a light source in the interior of the tank, the light source being operable to alternatively emit light and illuminate the interior of the tank and to not emit light and not illuminate the interior of the tank; and,
a switch communicating with the light source, the switch being operable to control the light source to emit light and control the light source to not emit light.

2. The system of claim 1, further comprising:
the light source being a LED light source.

3. The system of claim 1, further comprising:
the side wall of the tank being constructed of a material that allows light to pass through the side wall enabling light emitted from the light source and illuminating the interior of the tank to be visible from outside the interior of the tank.

4. The system of claim 3, further comprising:
the tank being a fluid tank containing a vehicle fluid in the interior of the tank, the vehicle fluid in the interior of the tank having a fluid surface in the interior of the tank; and,
light emitted from the light source and illuminating the interior of the tank also illuminates the fluid surface in the interior of the tank and enables the fluid surface to be visible from outside the interior of the tank.

5. The system of claim 4, further comprising:
a light sensor outside the tank, the light sensor being operable to sense light emitted from the light source and illuminating the interior of the tank.

6. The system of claim 1, further comprising:
the tank being a fluid tank containing a vehicle fluid in the interior of the tank, the vehicle fluid in the interior of the tank having a fluid surface in the interior of the tank; and,
the light source being positioned in the interior of the tank above the fluid surface enabling light emitted from the light source and illuminating the interior of the tank to illuminate the fluid surface in the interior of the tank.

7. The system of claim 6, further comprising:
the switch being positioned in the interior of the tank, the switch having means for sensing a position of the fluid surface in the interior of the tank, the switch being operable to control the light source to emit light in response to the switch sensing the fluid surface being at a first position in the interior of the tank, and the switch being operable to control the light source to not emit light in response to the switch sensing the fluid surface being at a second position in the interior of the tank.

8. The system of claim 6, further comprising:
the switch being positioned outside the interior of the tank, the switch being manually operable to control the light source to emit light in response to manual manipulation of the switch, and the switch being manually operable to control the light source to not emit light in response to manual manipulation of the switch.

9. The system of claim 8, further comprising:
the switch being positioned in a driver compartment of a vehicle.

10. The system of claim 6, further comprising:
the switch being positioned outside the interior of the tank and under a hood of a vehicle, the switch being operatively connected to the hood, the switch being operable to control the light source to emit light in response to the hood being moved to an open position of the hood on the vehicle, and the switch being operable to control the light source to not emit light in response to the hood being moved to a closed position of the hood on the vehicle.

11. The system of claim 6, further comprising:
the tank being a first fluid tank containing a first vehicle fluid of a plurality of fluid tanks containing a plurality of vehicle fluids; and,
the light source being a first light source of a plurality of light sources with each light source of the plurality of light sources being positioned in a fluid tank of the plurality of fluid tanks.

12. The system of claim 11, further comprising:
the switch operatively communicating with each light source of the plurality of light sources.

13. The system of claim 11, further comprising:
the switch being a first switch of a plurality of switches, each switch of the plurality of switches operatively communicating with a light source of the plurality of light sources and being operable to control the light source.

14. The system of claim 13, further comprising:
each switch of the plurality of switches being positioned in an interior of a fluid tank of the plurality of fluid tanks and each switch having means for sensing a position of a fluid surface of the vehicle fluid in the interior of the fluid tank.

15. The system of claim 11, further comprising:
the plurality of vehicle fluids being comprised of a brake fluid, a windshield washer fluid, a power steering fluid and a radiator fluid.
